# EUROPEAN PATENT SPECIFICATION

(11) **EP 3 335 142 B1**
(45) Date of publication and mention of the grant of the patent: **03.08.2022**
(21) Application number: 16834301.0
(22) Date of filing: 12.08.2016
(51) Int. Cl.: G06F 21/31, G06F 21/45, G06F 21/44, G06F 21/32, H04W 12/06, H04W 12/04, H04L 9/40

(54) **SYSTEM OF DEVICE AUTHENTICATION**
SYSTEM ZUR VORRICHTUNGSAUTHENTIFIZIERUNG
SYSTÈME D'AUTHENTIFICATION DE DISPOSITIFS

(30) Priority: 12.08.2015 AU 2015903231
(43) Date of publication of application: 20.06.2018
(73) Proprietor: Haventec PTY LTD, Sydney, NSW 2000 (AU)
(72) Inventor: RICHARDSON, Ric, B., Suffolk Park, NSW 2481 (AU)
(74) Representative: Cabinet Chaillot
(86) International application number: PCT/AU2016/000275
(87) International publication number: WO 2017/024335

(56) References cited:
- US-A1- 2005 091 539
- US-A1- 2007 136 573
- US-A1- 2007 162 963
- US-A1- 2014 020 073
- US-A1- 2014 189 827
- US-B1- 8 627 438
- US-B1- 9 065 824

## Description

### Background

Many efforts have been made to try and simplify the process of authentication of a person's identity over the years. One system, known as oAuth allows a person to authenticate with a site but then share those authentication credentials with other sites and services using tokens that expire over time.

One key advantage of this approach is that a person may only be required to authenticate their identity with one site but have access to multiple sites without the inconvenience of setting up and undergoing a separate authentication process for each site.

A disadvantage of this system is that it is not typically possible to use the same approach to authenticate users that connect from different devices while using the same account.

Whilst there are known mechanisms for a user to share data amongst multiple digital devices such as for example disclosed in US 2011/0138018 to QUALCOMM Incorporated, there is currently no mechanism for that user to cause consequential authentication based on an initial authentication on a first device.

This capability would be highly desirable in that an authentication on one of the user's devices for a site account could be used across multiple devices that the user owns or uses.

Embodiments of the present invention seek to address this problem or at least provide a useful alternative.

US 2007/136573 to Steinberg broadly discloses a system and method of using two or more multi-factor authentication mechanisms to authenticate online parties. The emphasis is on using two or more multi-factor authentication mechanisms.

EP 2873192 discloses methods and systems for using derived credentials to authenticate a device across multiple platforms. The emphasis is on using derived credentials to authenticate a device across multiple platforms.

### Notes

The term "comprising" (and grammatical variations thereof) is used in this specification in the inclusive sense of "having" or "including", and not in the exclusive sense of "consisting only of'.

The above discussion of the prior art in the Background of the invention, is not an admission that any information discussed therein is citable prior art or part of the common general knowledge of persons skilled in the art in any country.

### Brief Description of Invention

### Definitions:

Authentication: In this specification, authentication is used in the sense of taking steps to further identify a user log-in usually but not exclusively in a client server environment. Examples of the steps include requiring submitting a passcode which has previously been identified as associated with the user log-in. In other non-exclusive forms, biometric data may be required to effect the step to further identify a user log-in. Authentication is established at the software level as it necessarily involves a level of selectivity as to what data or categories of data are available for communication subsequent to authentication.

Trust: In this specification, trust refers to a relationship that can be established between two digital devices for the purpose of transmitting data between them. The trust may be at a hardware level.

The appended claims define the scope of protection. Any examples and technical descriptions of apparatuses, products and/or methods in the description and/or drawings not covered by the claims are presented not as embodiments of the invention but as background art or examples useful for understanding the invention. Accordingly, in one broad form of the invention, there is provided a method of authenticating a user with respect to more than one digital device; said user having an account on a server; said method comprising
a. the user effecting a login sequence and an authenticating sequence on a first digital device as referenced and recorded on the server thereby to authenticate the user with respect to the first digital device;
b. the user subsequently effecting a login sequence on a second digital device; the second digital device communicating the user login sequence to the server;
c. the server communicating an option to the second digital device to utilise the first digital device to effect authentication of the user with respect to the second digital device;
d. on receipt of a request from the second digital device to effect authentication by use of the first digital device:
   i. the server issuing a temporary unique ID to the second digital device;
   ii. the server sending an authentication request to the first digital device;
   iii. the authentication request including transmission of the temporary unique ID issued to the second digital device;
   iv. communicating the temporary unique ID from the first digital device to the user thereby to permit the user to determine whether to agree to the authentication request;
   v. the user communicating agreement or otherwise by communication effected from the first digital device to the server.

In yet a further broad form of the invention, there is provided a method of authenticating a user session instigated by a user on a digital device with respect to a given user login identity on a server; said method comprising:
a. authenticating a first digital device for a first user login identity as recorded on the server;
b. thereby to commit transfer of protected data between the first digital device and the server;
c. subsequently authenticating a second digital device for said first user login identity as recorded on said server by the steps of:
d. said user entering said first user login identity on said second digital device;
e. said second digital device being issued by said server with a temporary identifier in response to said user entering said first user login identity on said second digital device;
f. said server then transmitting said temporary identifier to said first digital device for communication to said user by said first digital device;
g. said user responding to said communication of said temporary identifier to said user by said first digital device by causing said first digital device to communicate an authorise said second digital device command to said server if a response condition is satisfied;
whereby said first user login identity is authorised for said second digital device.

In yet a further broad form of the invention, there is provided in an environment where a first device may communicate with a server subject to authentication of the device with respect to the server, a method of authenticating a second device with respect to the server; said method comprising:
a. On request, the server communicating an identifier to the second device and the first device;
b. Authenticating the second device to the same level as the first device subject to a confirmation step.

In yet a further broad form of the invention, there is provided an apparatus for effecting authentication of at least a second device with respect to a server environment where authentication of a first device has been effected; the apparatus including:
a. A memory storing at least a first log-in identifier and an associated authenticating data item
b. A processor which generates a temporary identifier as a first step in effecting authentication of at least the second device
a. A transmitter which transmits the temporary identifier to the at least a second device and to the first device.
b. A comparison device which compares the temporary identifier of the first device and of the second device and makes a decision based on the comparison as to whether to permit the server to authenticate the second device with respect to the server environment.

Preferably said response condition is a positive comparison of the temporary identifier communicated by said first digital device with the temporary identifier communicated to said second digital device by said server.

Preferably the temporary identifier is an alphanumeric sequence.

Preferably protected data is data stored with respect to said first user login on said server.

Preferably protected data is application data stored with respect to said first user login on said server.

Preferably authentication of said first digital device is effected by entry of a user login identifier and separate authenticating data into said first digital device.

Preferably said separate authenticating data is a password.

Preferably said separate authenticating data is biometric data.

Preferably, the confirmation step comprises comparing the identifier on the second device and the identifier on the first device.

Preferably, confirmation is effected if, and only if, the identifier on the second device matches with the identifier on the first device

Preferably, the identifier is an alpha-numeric sequence.

Preferably authentication may be established for a single session.

Preferably authentication may be established for a limited number of sessions

Preferably authentication may be established for an indefinite period

In yet a further broad form of the invention, there is provided media encoded with code which, when executed by a processor, performs the method as described above.

### Brief Description of Drawings

Embodiments of the present invention will now be described with reference to the drawings wherein:
Figure 1A - Illustrates a prior art hardware trust establishment system.
Figure 1B - Illustrates main components of an example embodiment.
Figure 2 is a flow diagram of steps effected by the example of Figure 1B.
Figure 3 is a block diagram illustrating interaction between a first digital device and a second digital device operable according to an embodiment of the system of the present invention.
Figure 4 is a block diagram illustrating an example of the interaction of Figure 3 as experienced by a user.

### Detailed Description and Operation

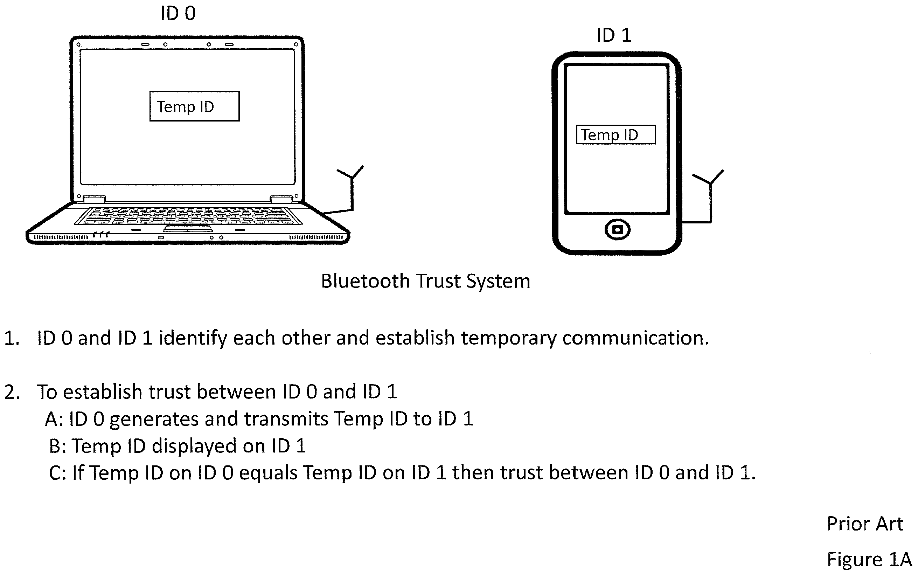

Figure 1A illustrates diagrammatically a prior art "Bluetooth" arrangement for establishing a data connection between two devices sufficient to establish a basic level of trust. This system operates direct between two devices and, in essence, is a mechanism to ensure that the two devices between which communication is desired are unambiguously identified in order to provide trust at the hardware level.

Embodiments of the present invention seek to provide the ability to authenticate a second or more device with respect to a server environment relying on authentication having first been established for a first device with respect to the same server environment. In preferred forms, but not exclusively, the server environment is defined by way of user log-in.

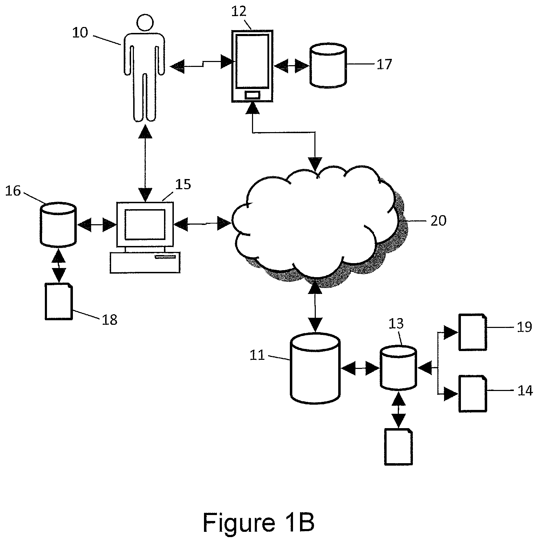

Figure 1B discloses the main components of an example embodiment of the present invention. Initially a user 10 would set up an authenticated connection to a server 11 enabled with the example embodiment using authentication methods known in the art.

To authenticate the user 10 and the user's first digital device 12, in this case a smartphone, the user uses a web-enabled application 17 to register with the server 11. In this instance this device 12 would be registered as the user's primary reference or vouching device.

The identity 14 of the device 12 is stored with the user's account 13 and can be referenced in the future when the user requires additional devices that they own or use to be authenticated with the server 11.

The user's account 13 also includes an account ID or name or username 16 which can be used to uniquely identify and name the user of the account.

When the user 10 wishes to authenticate themselves using a new device 15, the user connects the device 15 to the server 11 over a public network such as the Internet 20 using an application such as a web browser 16 and then enters their account name 16 to identify themselves as user 10 to the server 11.

The server 11 then notifies the user 10 that their second device is not yet recognised as an authenticated device and asks the user 10 if they would like to add the device to their account 13.

Upon agreeing to proceed, the user is presented with a button to initiate a request from the server 11 to the user's primary vouching device 12 to verify an authenticated connection between the user 10 and the server 11. The user is also presented with a device identification such as a four digit number 18 which can be used to identify the device.

Subsequently the second digital device 15 displays a screen 21 explaining to the user that they will need to obtain authentication from their vouching device in order to proceed with authenticating their new device 15. They will also be shown temporary ID 21 preferably in the form of a four-digit number that is generated new each time a new device requests authentication. This four-digit number is generated by the server 11 and is used once to identify the requesting device 15 to the vouching device 12 when an authentication request is made.

The new device 15 then goes into a waiting mode to receive an authentication verification from the server 11 after the vouching device 12 has been used to verify your identity.

At the same time the server 11 is prompted to initiate a connection with the user's primary first digital vouching device 12 to verify and authorise the user's authentication request.

In the case of a smartphone such as an Apple iPhone, a notification message can be then sent to the user's device 12, which in turn can open the user's application 17 to verify the users identity.

If the application's 17 connection to the server 11 is current and not expired the user is then shown the four-digit number that identifies the requesting device and the user is prompted on screen to authorise the new device after verifying the identity of the new device.

If the application's 17 connection to the server 11 is not current and not expired the user is then asked to authenticate using the vouching device 12. Subsequently the user is shown the four-digit number that identifies the requesting device and the user is prompted on screen to authorise the new device after verifying the identity of the new device.

Once the server 11 receives a verification of the identity of the new device 15, the server allows an authenticated session to proceed between the new device 15 and the server 11.

The screen of the new device 15 notifies the user that the authentication has been completed successfully and access to the site is enabled. Additionally a new device identity 19 is added to the user's account 13 on the server 11.

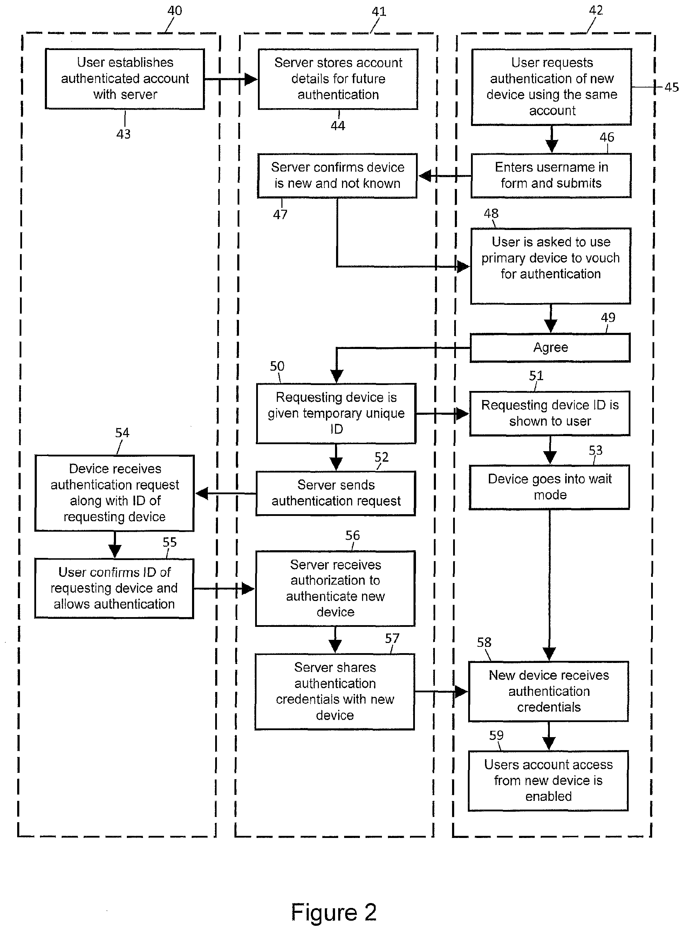

Figure 2 discloses an example control process of the example embodiment. The process involves an initial device being used by a user 40, a server 41 with which the user desires to connect, and a second device 42 that the user wants to authenticate with their account on the server.

Initially a user establishes an authenticated account with the server 43 and the server stores the account details for future authentication 44.

Subsequently a user may request that a new device be authenticated by the user 45 to use the same account on the server. To identify themselves to the server the user enters their username 46 and submits it for use by the server.

The server then confirms that the username is known but recognises that the device being used by the user is not known to the server 47. The server then asks the user if they want to use the authentication credentials of an existing device 48 to vouch for the new device to be recognised with the account. If the user agrees 49 then the server gives the requesting device a temporary unique identity 50 which is then shown to the user on the new device screen 51. The new device then goes into a waiting mode 53 until the request to receive an authentication is answered.

The server 41 then sends an authentication request 52 for the new device to the vouching device 40 which is already authenticated and in use or can use existing authentication credentials to establish and authenticate it and the users identity.

The authentication request is received by the existing device along with the identity of the requesting device 54. This step is important in that it allows the user to properly identify the device that is being used to request an new authentication.

The user then confirms the identity of the requesting device and allows authentication of the new device to proceed 55. Subsequently the server receives the authorisation to authenticate the user on the new device 56 and the server shares authentication credentials with the new device 57.

As a result the new device receives the authentication credentials 58 and the new device is allowed to be used to access the users account from the new device 59.

The result is an authentication system that allows authenticated credentials from a known device to be shared with a new device to allow it to access the same account and resources.

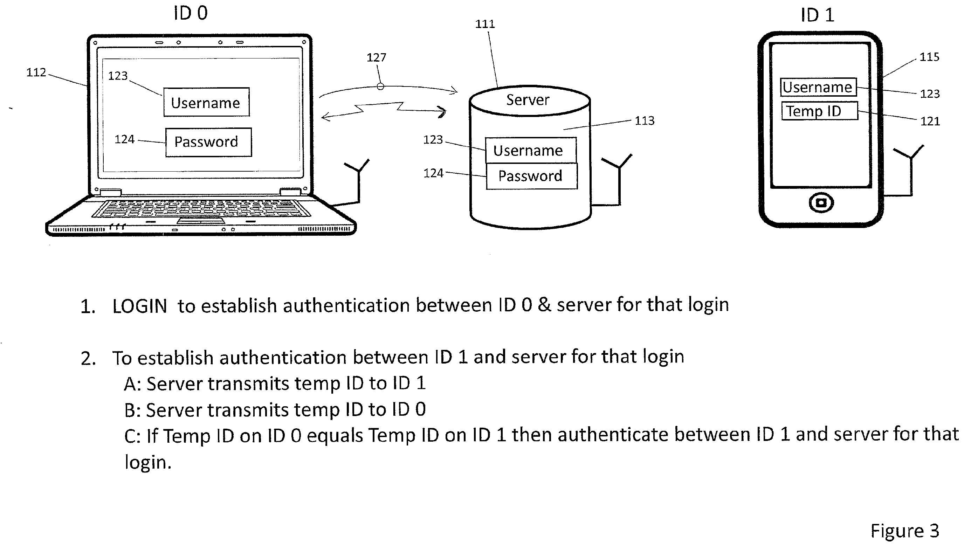

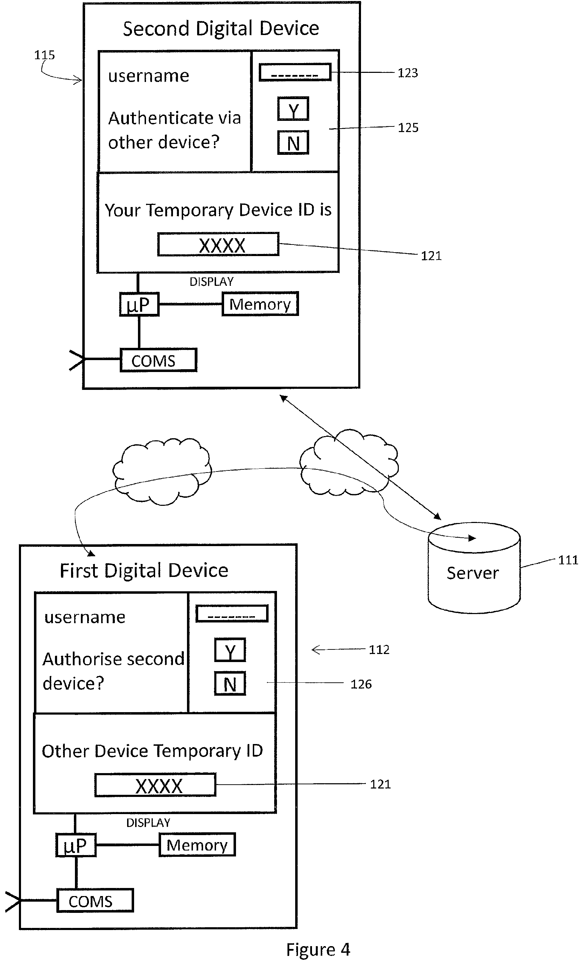

Figures 3 and 4 are block diagrams illustrating interaction between a first digital device and a second digital device operable according to an embodiment of the system of the present invention.

With reference to Figure 3 where like components are numbered as for earlier embodiments except in the 100s series, there is shown a first digital device 112 (ID 0) in communication with a server 111 whereby a user 110 may "log-in" by way of an application running on digital device 112 to an user account 113 on server 111. In order for data or applications associated with the user account 113 to be communicated to digital device 112 the user log-in must be authenticated by the server 111. In this case, the step of authentication is provided by the user entering a username 123 and an associated password 124. If these match then authentication has occurred and a user session may operate between the first digital device 112 and the server 111.

In accordance with an embodiment of the present invention, if the user wishes to authenticate a second digital device 115 (ID 1) with respect to the same user account 113, this may be effected by entering the same username 123 into an application on second digital device 115 thereby to trigger a log-in sequence to the server 111.

As illustrated in Figure 4, in use, the user may be asked to elect whether to authenticate via another device, for example via choice check-box 125.

In the event the user does elect to authenticate via another device, server 111 generates and issues a temporary ID 121 to second digital device 115. The temporary ID 121 is then displayed on second digital device 115 or is otherwise made available for communication to the user sufficient for the user to verify the temporary ID 121 which has been issued for the second digital device 115.

At the same time, subsequently, server 111 issues the same temporary ID 121 to first digital device 112. Again, the first digital device 112 causes the temporary ID 121 to be displayed on first digital device 112 or otherwise made available for communication to the user sufficient for the user to verify the temporary ID 121 which has been issued for the first digital device 112.

In use, the user is then placed in a position where they can then compare the temporary ID 121 appearing on or otherwise associated with second digital device 115 with the temporary ID 121 appearing on or otherwise associated with first digital device 112 during a pre-determined time-frame. In one form, if the two temporary IDs match, then may confirm to first digital device 112 that a match has occurred and trigger by way of choice check-box 126 transmission of an authorisation signal 127 from first digital device 112 to server 111.

On receipt of the authorisation signal 127 the server then causes the log-in on second digital device 115 to be treated as authenticated thereby allowing the user to access data and services under that log-in user account 113 on server 111.

### Alternative Embodiments

The example embodiment shows the vouching of an authentication to occur between a personal computer and a smartphone with the smartphone being the vouching device. An alternative embodiment could allow any device the user owns or operates to vouch for any device the user wants to add to their account.

The example embodiment uses a four-digit number to identify the device requesting authentication. An alternative embodiment could use any method to identify the requesting device in such a way so as to ensure that a user of the vouching device can be reasonably satisfied as to the identity of the requesting device.

The example embodiment does not specify how the authenticated session between the server and the vouching device is shared with the new device. An alternative embodiment could use a token or a session key. In yet another alternative embodiment actual authentication data from the vouching device could be used in part or in duplicate as a means of allowing a new device to establish its own authentication credentials. For example if a PIN was used to authenticate a vouching device then a system that uses the same PIN on the new device could be used to establish the new authentication credentials.

The example embodiment shows a new device being authenticated by previously registered device for a secure session. An alternative embodiment could allow the authentication to occur for use in a single session, a limited number of sessions or time period, or indefinitely on a permanent basis.

## Claims

1. A method carried out by a server (41, 111) for authenticating a second device (42,115) comprising:
- receiving, from a first device (40, 112) having a first device identity, a request for establishing an authenticated user's account (113);
- storing the user's account details comprising the first device identity and a username (123);
- receiving, from the second device (42, 115), a request to authenticate the second device (42, 115) to use the user's account (113), wherein the request comprises the username (123);
- sending, to the second device (42, 115), a request to use the primary device to vouch for authentication;
- receiving, from the second device (42, 115), an acceptance (48, 49) of using the first device (40, 112);
- sending, to the second device (42, 115), a temporary unique identifier (121);
- sending, to the first device (40, 112), an authentication request comprising the temporary unique identifier (121);
- receiving, from the first device (40, 112), an authorization to authenticate the second device (42, 115);
- sending, to the second device (42, 115), authorization credentials (57)of the first device (40, 112) to access the user's account (113).

2. The method of claim 1 wherein the temporary unique identifier is an alpha-numeric sequence.

3. The method of claim 1 wherein authentication may be established for a single session.

4. Media encoded with code which, when executed by a processor, performs the method of any previous claim.

5. A server comprising means adapted to perform the steps of the method defined in claim 1.

## Patentansprüche

1. - Verfahren, ausgeführt von einem Server (41, 111), zur Authentifizierung eines zweiten Geräts (42, 115), Folgendes umfassend:
- Empfangen einer Anfrage zum Einrichten eines authentifizierten Benutzerkontos (113) von einem ersten Gerät (40, 112), das eine erste Geräteidentität aufweist,
- Speichern der Details des Benutzerkontos, welche die erste Geräteidentität und einen Benutzernamen (123) umfassen,
- Empfangen einer Anfrage zum Authentifizieren des zweiten Geräts (42, 115) zwecks Nutzung des Benutzerkontos (113) von dem zweiten Gerät (42, 115), wobei die Anfrage den Benutzernamen (123) umfasst,
- Senden einer Anfrage zum Verwenden des primären Geräts als Bürgen für die Authentifizierung an das zweite Gerät (42, 115),
- Empfangen einer Zustimmung (48, 49) zum Verwenden des ersten Geräts (40, 112) von dem zweiten Gerät (42, 115),
- Senden einer temporären eindeutigen Kennung (121) an das zweite Gerät (42, 115),
- Senden einer Authentifizierungsanfrage, welche die temporäre eindeutige Kennung (121) umfasst, an das erste Gerät (40, 112),
- Empfangen einer Autorisierung zum Authentifizieren des zweiten Geräts (42, 115) von dem ersten Gerät (40, 112),
- Senden von Autorisierungsberechtigungsnachweisen (57) des ersten Geräts (40, 112) für den Zugriff auf das Benutzerkonto (113) an das zweite Gerät (42, 115).

2. - Verfahren nach Anspruch 1, wobei die temporäre eindeutige Kennung eine alphanumerische Folge ist.

3. - Verfahren nach Anspruch 1, wobei die Authentifizierung für eine einzelne Sitzung eingerichtet werden kann.

4. - Medien, die mit Code codiert sind, der bei Ausführung durch einen Prozessor das Verfahren nach einem der vorhergehenden Ansprüche ausführt.

5. - Server, Mittel umfassend, die dafür eingerichtet sind, die Schritte des in Anspruch 1 definierten Verfahrens auszuführen.

## Revendications

1. - Procédé mis en œuvre par un serveur (41, 111) pour authentifier un second dispositif (42, 115) comprenant :
- recevoir, en provenance d'un premier dispositif (40, 112) ayant une première identité de dispositif, une demande d'établissement d'un compte d'utilisateur authentifié (113) ;
- stocker des détails de compte d'utilisateur comprenant la première identité de dispositif et un nom d'utilisateur (123) ;
- recevoir, en provenance du second dispositif (42, 115), une demande d'authentification du second dispositif (42, 115) pour utiliser le compte d'utilisateur (113), la demande comprenant le nom d'utilisateur (123) ;
- envoyer, au second dispositif (42, 115), une demande d'utilisation du premier dispositif pour attester de l'authentification ;
- recevoir, en provenance du second dispositif (42, 115), une acceptation (48, 49) d'utilisation du premier dispositif (40, 112) ;
- envoyer, au second dispositif (42, 115), un identifiant unique temporaire (121) ;
- envoyer, au premier dispositif (40, 112), une demande d'authentification comprenant l'identifiant unique temporaire (121) ;
- recevoir, en provenance du premier dispositif (40, 112), une autorisation d'authentification du second dispositif (42, 115) ;
- envoyer, au second dispositif (42, 115), des justificatifs d'autorisation (57) du premier dispositif (40, 112) pour accéder au compte d'utilisateur (113).

2. - Procédé selon la revendication 1, dans lequel l'identifiant unique temporaire est une séquence alphanumérique.

3. - Procédé selon la revendication 1, dans lequel l'authentification peut être établie pour une seule session.

4. - Supports codés avec un code qui, lorsqu'il est exécuté par un processeur, met en œuvre le procédé selon l'une quelconque des revendications précédentes.

5. - Serveur comprenant des moyens conçus pour mettre en œuvre les étapes du procédé défini dans la revendication 1.
